(19) Europäisches Patentamt
European Patent Office
Office européen des brevets

(11) Veröffentlichungsnummer : **0 495 373 B1**

(12) **EUROPÄISCHE PATENTSCHRIFT**

(45) Veröffentlichungstag der Patentschrift :
**03.08.94 Patentblatt 94/31**

(51) Int. Cl.$^5$ : **C08G 18/28,** C08G 18/10, C08G 18/48, C09D 7/12

(21) Anmeldenummer : **92100169.9**

(22) Anmeldetag : **08.01.92**

# (54) Verdickungsmittel auf der Basis von Blockpolymeren mit Polyurethan- und Polyethergruppen.

(30) Priorität : **17.01.91 DE 4101239**

(43) Veröffentlichungstag der Anmeldung :
**22.07.92 Patentblatt 92/30**

(45) Bekanntmachung des Hinweises auf die Patenterteilung :
**03.08.94 Patentblatt 94/31**

(84) Benannte Vertragsstaaten :
**BE DE FR GB IT NL**

(56) Entgegenhaltungen :
**EP-A- 0 260 430**
**GB-A- 1 182 365**
**US-A- 4 079 028**

(73) Patentinhaber : **Th. Goldschmidt AG**
**Goldschmidtstrasse 100**
**D-45127 Essen (DE)**

(72) Erfinder : **Fock, Jürgen, Dr.**
**Mörsenbroicher Weg 114**
**W-4000 Düsseldorf 30 (DE)**
Erfinder : **Esselborn, Eberhard**
**Pilotystrasse 21**
**W-4300 Essen 1 (DE)**

**EP 0 495 373 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Verbindungen der allgemeinen Formel

$$A-(B-C)_m-B-A$$

in der
A ein Rest der Formel

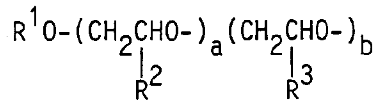

B ein Rest der Formel

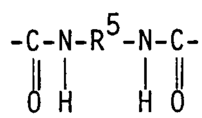

C ein Rest der Formel

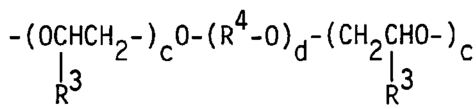

ist.

- $R^1$ = Alkylrest mit 1 bis 22 Kohlenstoffatomen, oder ein Alkylarylrest, dessen Alkylrest 8 bis 12 Kohlenstoffatome aufweist,
- $R^2$ = Alkylrest mit 6 bis 26 Kohlenstoffatomen,
- $R^3$ = Wasserstoff-, Methyl- oder Ethylrest, mit der Maßgabe, daß mindestens 50 % der Reste $R^3$ Wasserstoffreste sind,
- $R^4$ = zweiwertiger Kohlenwasserstoffrest mit 2 bis 15 Kohlenstoffatomen,
- $R^5$ = zweiwertiger Kohlenwasserstoffrest mit 6 bis 13 Kohlenstoffatomen,
- a = Wert von 1 bis 10,
- b = Wert von 0 bis 200,
- c = Wert von 5 bis 200,
- d = Wert von 0 oder 1,
- m = Wert von 0 bis 20.

Die Erfindung betrifft ferner ein Verfahren zur Herstellung dieser Verbindungen und deren Verwendung als Verdickungsmittel für überwiegend wäßrige Systeme, insbesondere Dispersionsfarben.

Verdickungsmittel auf der Basis von Blockpolymeren mit Polyurethan- und Polyethergruppen sind bereits aus dem Stand der Technik bekannt:
Die DE-OS 36 30 319 betrifft ein Verfahren zur Herstellung von Verdickungsmitteln, insbesondere flüssigen Verdickungsmitteln, durch Alkoxylierung von Alkoholen mit Alkylenoxiden und Umsetzung des erhaltenen Polyethers mit Diisocyanaten, bei dem man einwertige Alkohole mit 8 bis 30 Kohlenstoffatomen mit einem Gemisch Ethylenoxid/Propylenoxid, wobei das molare Verhältnis Ethylenoxid zu Propylenoxid im Gemisch etwa 30 : 70 bis 90 : 10 beträgt und pro Mol Alkohol 20 bis 200 Mol Alkylenoxide eingesetzt werden, alkoxyliert und den erhaltenen Polyether in einem molaren Verhältnis von 1 : 0,7 bis 1 : 0,25 mit einem Diisocyanat umsetzt.

Aus der US-PS 4 499 233 ist ein ein wasserdispergierbares modifiziertes Polyurethan bekannt, welches ein unter wasserfreien Bedingungen erhaltenes Reaktionsprodukt eines

(a) Polyisocyanates,

(b) eines Polyetherpolyols in einer Menge von etwa 0,10 bis etwa 10,00 Mol/Mol Polyisocyanat,

(c) eines Modifizierungsmittels in einer Menge von etwa 0,015 bis etwa 3,400 Mol/Mol Polyisocyanat, wobei das Modifizierungsmittel die Formel

$$X_x-R-Y_y$$

aufweist, in der
R eine Gruppe mit 0 bis 10 Kohlenstoffatomen darstellt,
X jeweils eine Gruppe mit wenigstens einem aktiven Wasserstoffrest (primäre Amino-, sekundäre Amino-, Carboxylgruppe oder Mischungen hiervon), und
Y jeweils eine Gruppe mit wenigstens einem aktiven Wasserstoffrest (primäre Amino-, sekundäre Amino-, Carboxyl-, Hydroxyl- oder Mercaptogruppe oder Mischungen hiervon) ist,
x + y eine ganze Zahl größer als 1 und x wenigstens = 1 ist, wobei das Modifizierungsmittel aus weniger als etwa 20 Mol-% von Verbindungen mit $x + y \geqq 3$ gebildet wird, und wobei das Polyisocyanat, das Polyetherpolyol zur Bildung der Kette des Polymeren dienen, und
(d) eines Verkappungsmittels, welches mit dem Reaktionsprodukt von (a), (b) und (c) reagieren kann und in einer zur Verkappung dieses Reaktionsproduktes ausreichenden Menge vorliegt,

ist.

Die europäische Patentanmeldung EP-A 0 307 775 offenbart ein ähnliches wasserdispergierbares modifiziertes Polyurethan, welches das Reaktionsprodukt eines
(a) Polyisocyanates,
(b) eines Polyetherpolyols in einer Menge von etwa 0,10 bis etwa 10,00 Mol/Mol Polyisocyanat,
(c) eines Modifizierungsmittels in einer Menge von etwa 0,015 bis etwa 3,400 Mol/Mol Polyisocyanat, wobei das Modifizierungsmittel wenigstens zwei aktive Wasserstoffreste und wenigstens eine seitenständige hydrophobe Gruppe hat, wobei die seitenständige hydrophobe Gruppe wenigstens 10 Kohlenstoffatome aufweist und frei von gegenüber dem Polyisocyanat oder dem Polyetherpolyol reaktiven Gruppen ist, und
(d) eines Verkappungsmittels, welches mit dem Reaktionsprodukt von (a), (b) und (c) reagieren kann und in einer zur Verkappung dieses Reaktionsproduktes ausreichenden Menge vorliegt,

ist.

Es ist ferner auf die US-PS 4 496 708 hinzuweisen, welche ein Kammpolymer betrifft, das ein wasserlösliches Polyurethan mit den wiederkehrenden Einheiten

$$-X_{a'}-,\ -Y_b-\ \text{und}\ -(X-)_m-Z_c-$$

umfaßt, wobei

X der Rest eines organischen Polyisocyanates ist,
Y der Rest eines Polyethylenglykol-homo- oder -copolymeren mit bis zu 50 Mol-% $C_3$ bis $C_5$-Polyoxyalkylen oder das monomere Equivalent des vorgenannten Polyethylenglykols ist,
Z der Rest eines hydrophoben Reaktanden mit einer einwertigen hydrophoben Gruppe ist, dessen Beitrag zum Molvolumen wenigstens etwa 130 cc/Mol ist,
b wenigstens etwa 2,
c wenigstens etwa 2,
m 0 oder 1 ist,
a' einen solchen Wert hat, daß

$\frac{a' + mx}{b + c}$ einen Wert von etwa 0,5 bis etwa 1,25 hat und ausreichend

ist, daß das Polymere ein Molekulargewicht von wenigstens etwa 10 000 aufweist, und wobei
(1) das Polymere wenigstens eine Z-Einheit hat, die von jedem Ende des Polymeren durch wenigstens eine X-Einheit getrennt ist, und
(2) der HLB-Wert des Polymeren zwischen etwa 14 und etwa 19,5 liegt.

Diese bekannten Verdickungsmittel haben im allgemeinen eine ausgeprägte Strukturviskosität und eine nicht immer befriedigende und ausreichende verdickende Eigenschaft. Die vorliegende Erfindung befaßt sich deshalb mit dem technischen Problem, Verdickungsmittel auf der Basis von Blockpolymeren aufzufinden, die Polyurethan- und Polyethergruppen, sowie hydrophobe Gruppen aufweisen und deren verdickende Wirkung in gewissem Umfange scherkraftunabhängig ist. Die mit den erfindungsgemäßen Verbindungen erhaltenen verdickten Lösungen sollen somit wenigstens annähernd Newton'sches Verhalten zeigen. Dabei wird angestrebt, daß die verdickende Wirkung möglichst hoch ist.

Diese und weitere vorteilhafte Eigenschaften zeigen die erfindungsgemäßen Verbindungen der allgemeinen Formel

$$A-(B-C)_m-B-A$$

in der A ein Rest der Formel

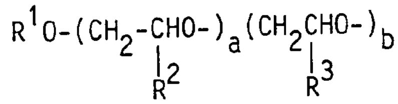

B ein Rest der Formel

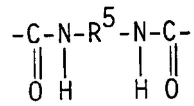

C ein Rest der Formel

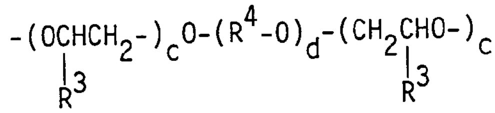

ist

- $R^1$ = Alkylrest mit 1 bis 22 Kohlenstoffatomen, oder ein Alkylarylrest, dessen Alkylrest 8 bis 12 Kohlenstoffatome aufweist,
- $R^2$ = Alkylrest mit 6 bis 26 Kohlenstoffatomen,
- $R^3$ = Wasserstoff-, Methyl- oder Ethylrest, mit der Maßgabe, daß mindestens 50 % der Reste $R^3$ Wasserstoffreste sind,
- $R^4$ = zweiwertiger Kohlenwasserstoffrest mit 2 bis 15 Kohlenstoffatomen,
- $R^5$ = zweiwertiger Kohlenwasserstoffrest mit 6 bis 13 Kohlenstoffatomen,
- a = Wert von 1 bis 10,
- b = Wert von 0 bis 200,
- c = Wert von 5 bis 200,
- d = Wert von 0 oder 1,
- m = Wert von 0 bis 20, wobei $b \geqq 2$ sein muß, wenn m einen Wert von 0 hat.

Der Rest $R^1$ ist ein Alkylrest mit 1 bis 22 Kohlenstoffatomen oder ein Alkylarylrest, dessen Alkylrest 8 bis 12 Kohlenstoffatome aufweist. Als Rest $R^1OH$ stellt er den Startalkohol dar, an den Alkylenoxide der Formel

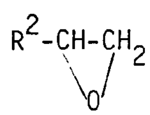 und 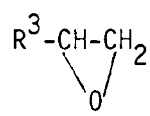

angelagert worden sind und nach Abzug eines endständigen Wasserstoffrestes den Rest A bildet. Je nach Kettenlänge trägt der Rest zur Hydrophobie der Verbindung bei. Ist der Rest $R^1$ ein niederer Alkylrest, insbesondere ein Methylrest, muß der Index $a > 1$ sein. Ist der Rest $R^1$ aber ein längerkettiger Alkylrest, wie etwa ein Octyl-, Decyl- oder Hexadecylrest, stellt der Rest $R^1$ einen hydrophoben Rest dar. Ist der Rest $R^1$ ein Alkylarylrest, sind der Octylphenyl-, Decylphenyl- und der Dodecylphenylrest bevorzugt.

Der Rest $R^2$ ist ein Alkylrest mit 6 bis 26 Kohlenstoffatomen und kann geradkettig oder verzweigt sein. Besonders bevorzugt weist der Rest $R^2$ 10 bis 18 Kohlenstoffatome auf.

Der Rest $R^3$ ist ein Wasserstoff-, Methyl- oder Ethylrest. Die mit dem Index b bezeichnete Oxyalkyleneinheit kann somit eine Oxyethylen-, Oxypropylen- oder Oxybutylen-Einheit sein, wobei allerdings die Bedingung zu erfüllen ist, daß mindestens 50 % der Reste $R^3$ Wasserstoffreste sind, d. h. daß mindestens die Hälfte der Oxyalkylen-Einheiten Oxyethylen-Einheiten sind. Vorzugsweise ist $R^3$ ein Wasserstoffrest.

$R^4$ ist ein zweiwertiger Kohlenwasserstoffrest mit 2 bis 15 Kohlenstoffatomen, vorzugsweise mit 2 bis 6 Kohlenstoffatomen. Der Rest $R^4$ ist insbesondere ein geradkettiger Alkylenrest, wie der Rest $-(CH_2)_{2-6}$ oder ein aromatischer Rest, wie z. B. der

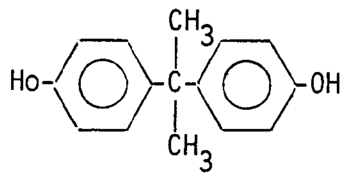 Rest

Dabei stellt die Verbindung $HO-R^4-OH$ den zweiwertigen Startalkohol dar, an den Alkylenoxid angelagert wird und der formal nach Abzug der beiden endständigen H-Atome den Rest C bildet. Die Gruppe $-R^4-O-$kann allerdings entfallen (d = 0), wenn zur Herstellung des Polyoxyalkylenglykols Wasser als Starter verwendet worden ist.

Der Rest $R^5$ ist ein zweiwertiger Kohlenwasserstoffrest mit 6 bis 13, vorzugsweise 6 bis 10 Kohlenstoffatomen. Der Rest $R^5$ kann ein aliphatischer oder aromatischer Rest sein. Vorzugsweise ist der Rest $R^5$ der Hexamethylen-, Diphenylmethan- oder Toluylenrest.

Der Index a kennzeichnet in dem Polymerblock A die Anzahl der einen hydrophoben Rest tragenden Oxyalkylen-Einheiten und hat einen Wert von 1 bis 10, vorzugsweise 2 bis 5.

Der Index b kennzeichnet in dem Polymerblock A die Anzahl der hydrophilen Oxyalkylen-Einheiten und hat einen Wert von 0 bis 200, vorzugsweise 5 bis 100, insbesondere bevorzugt 5 bis 50.

Der Index c kennzeichnet in dem Polymerblock C die Anzahl der Oxyalkylen-Einheiten und hat einen Wert von 5 bis 200, vorzugsweise 50 bis 100.

m kennzeichnet die Anzahl der wiederkehrenden Polymer-Blöcke ( B - C ) und hat einen Wert von 0 bis 20, vorzugsweise 0 bis 5.

Durch die Bedingung $b \geqq 2$, wenn $m = 0$, wird sichergestellt, daß die dann vorliegenden Verbindungen des Typs A-B-A wasserdispergierbar sind.

Beispiele erfindungsgemäßer Verbindungen sind:

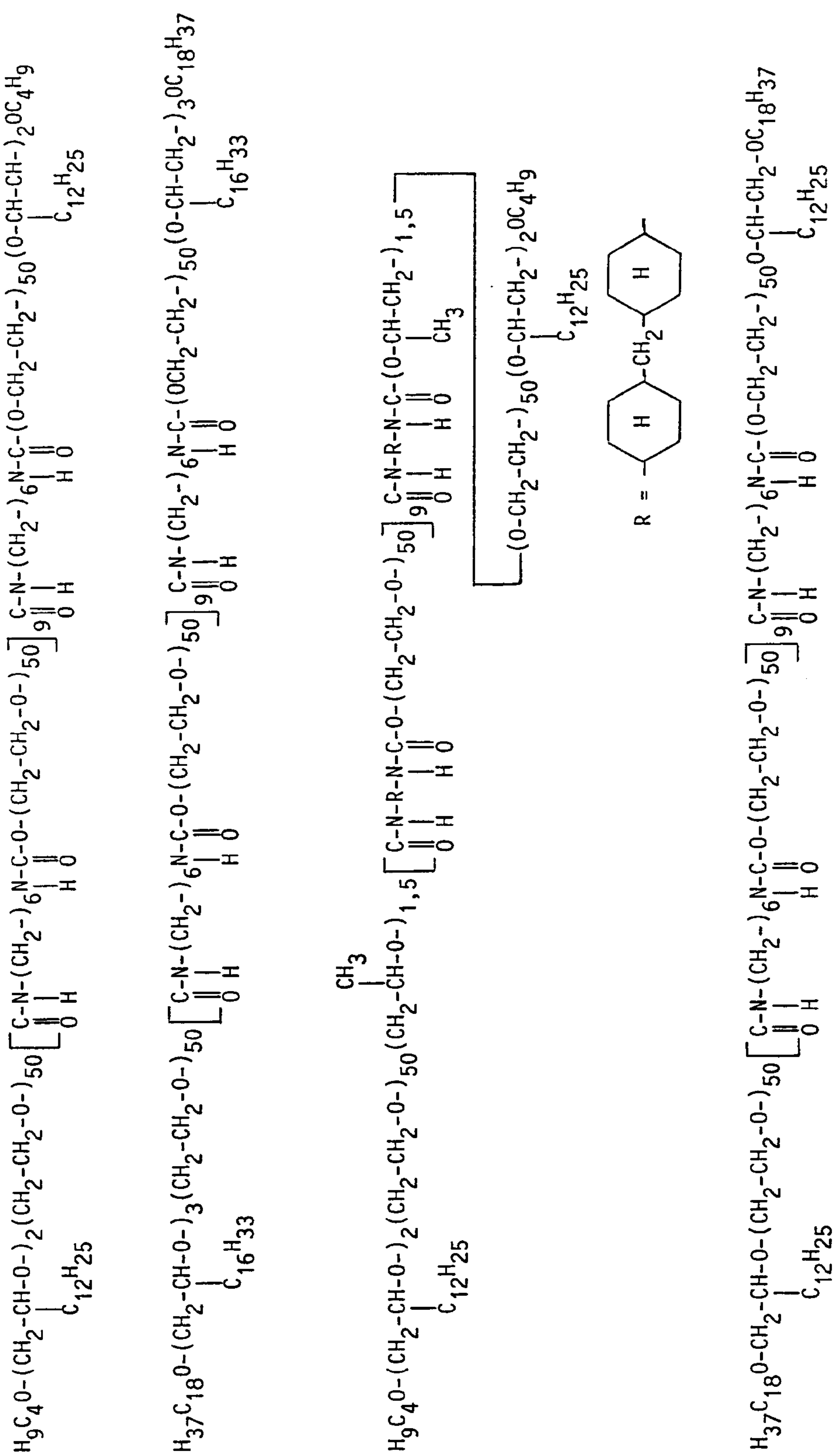

Ein weiterer Gegenstand der Erfindung ist ein Verfahren zur Herstellung der erfindungsgemäßen Verbindungen. Dieses ist dadurch gekennzeichnet, daß man entweder

a) zunächst Diisocyanate der allgemeinen Formel

$$O{=}C{=}N{-}R^5{-}N{=}C{=}O,$$

mit Polyoxyalkylendiolen der allgemeinen Formel

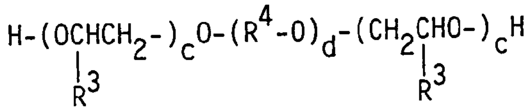

in zur Urethanbildung an sich bekannter Weise in einem Molverhältnis von (m+1) Mol Diisocyanat : m Mol Polyoxyalkylendiol umsetzt und das erhaltene Produkt mit zur Umsetzung der restlichen Isocyanatgruppen ausreichenden Mengen eines Polyoxyalkylenmonoethers der allgemeinen Formel

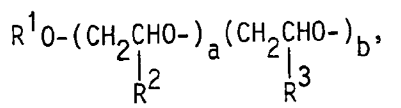

umsetzt, oder

b) das Gemisch der Polyoxyalkylenmono- und -diole mit den Diisocyanaten in den oben angegebenen Molverhältnissen und der oben angegebenen Weise umsetzt.

Die einzelnen Verfahrensschritte verlaufen in an sich bekannter Weise. Die Umsetzung des organischen Diisocyanates (I) mit dem Diol (II) und dem Monool (III) wird unter Ausschluß von Wasser durchgeführt. Vorzugsweise werden die Reaktionspartner vor der Umsetzung in einem geeigneten Lösungsmittel, wie z. B. Toluol, gelöst, und etwa vorhandenes Wasser durch azeotrope Destillation entfernt. Es werden für die Umsetzung von organischen Diisocyanaten mit Hydroxylgruppen enthaltenden Verbindungen an sich übliche und bekannte Katalysatoren, wie Dibutylzinndilaurat, zugesetzt. Die Reaktionstemperatur beträgt im allgemeinen zwischen 50 und 150°C, insbesondere 70 bis 120°C, besonders bevorzugt 70 bis 90°C.

Die erfindungsgemäßen Verbindungen können mit bekannten anionaktiven, kationaktiven und nichtionogenen Tensiden kombiniert werden. Im Regelfall erhöht sich hierdurch die Viskosität der wäßrigen Lösungen der erfindungsgemäßen Verbindungen.

Die erfindungsgemäßen Verbindungen erfüllen die eingangs gestellten Forderungen und zeigen hohe verdickende Wirksamkeit, welche weitgehend scherkraftunabhängig ist.

Ein weiterer Gegenstand der Erfindung ist deshalb die Verwendung der erfindungsgemäßen Verbindungen als Verdickungsmittel für überwiegend wäßrige Systeme, insbesondere Dispersionsfarben. Sie üben keinen nachteiligen Einfluß auf die Eigenschaften der Dispersionsfarben aus und beeinträchtigen insbesondere nicht deren Witterungsbeständigkeit. Sie verbessern die Fließeigenschaften der Dispersionsfarben und deren Filmbildung.

Herstellung und Eigenschaften der erfindungsgemäßen Verbindungen sollen durch die folgenden Beispiele noch näher erläutert werden.

**I. Herstellung der als Ausgangsprodukte dienenden monohydroxyfunktionellen Polyether mit hydrophober Endgruppe**

Produkt 1 A

14,8 g (ca. 0,2 Mol) n-Butanol und 1,4 g (ca. 0,02 Mol) Kaliummethylat werden in einem Druckreaktor mit einem zwangsfördernden Umlaufsystem sorgfältig mit Reinstickstoff gespült und auf 110°C erhitzt. Zu diesem Gemisch werden 93,3 g (ca. 0,44 Mol) Tetradecenoxid-1 gegeben und über einen Zeitraum von 2 h bei 120°C erhitzt. Anschließend werden 484,0 g (ca. 11,0 Mol) Ethylenoxid und 19,1 g (ca. 0,3 Mol) Propylenoxid so schnell zugegeben, daß die Innentemperatur des Reaktors 120°C und der Innendruck 6 bar nicht überschreiten. Nach der vollständigen Zugabe des Ethylenoxids und des Propylenoxids wird die Temperatur so lange auf 115°C gehalten, bis ein konstant bleibender Druck das Ende der Reaktion anzeigt. Schließlich wird unumgesetztes Monomeres bei 80 bis 90°C im Vakuum entfernt. Das Reaktionsprodukt wird mit Phosphorsäure neutralisiert, das Wasser durch Destillation im Vakuum entfernt und das gebildete Natriumphosphat unter Verwendung eines Filterhilfsmittels abfiltriert. Die Hydroxylzahl des Produktes beträgt 23. Bei Annahme einer Funktionalität von 1 entspricht dies einem Molekulargewicht von 2440.

Produkte 2 A bis 28 A

Es wird wie oben gezeigt verfahren, jedoch mit dem Unterschied, daß Startalkohole unterschiedlicher Kohlenstoffzahl, langkettige α-Olefinepoxide unterschiedlicher Kohlenstoffzahl und Molmenge, sowie Alkylenoxide, wie Ethylenoxid, Propylenoxid und Butylenoxid in unterschiedlicher Molmenge eingesetzt werden. Die Tabelle 1 zeigt die Zusammensetzung, die Hydroxylzahl und das bei Annahme einer Funktionalität von 1 errechnete Molekulargewicht der erhaltenen Polyether.

Tabelle 1

| Produkt-Nr. | Start-alkohol [C-Zahl] | Alkylenoxid-1 [C-Zahl] | Alkylenoxid-1 [Mol] | EO [Mol] | PO[1] [Mol] | BO [Mol] | OH-Zahl | Molgewicht aus OH-Zahl [g/Mol] |
|---|---|---|---|---|---|---|---|---|
| 1 A | 4 | 14 | 2 | 50 | 1,5 | - | 23,0 | 2439 |
| 2 A | 1 | 14 | 2 | 50 | 1,5 | - | 23,2 | 2418 |
| 3 A | 4 | 14 | 2 | 50 | - | - | 22,1 | 2538 |
| 4 A | 10 | 14 | 2 | 50 | 1,5 | - | 24,0 | 2338 |
| 5 A | 12 | 14 | 2 | 50 | - | - | 25,5 | 2200 |
| 6 A | 18 | 14 | 1 | 50 | - | - | 26,0 | 2158 |
| 7 A | 22 | 14 | 2 | 50 | 1,5 | - | 22,8 | 2461 |
| 8 A | 4 | 8 | 2 | 50 | 1,5 | - | 23,3 | 2408 |
| 9 A | 4 | 10 | 2 | 50 | - | - | 27,1 | 2070 |
| 10 A | 4 | 12 | 2 | 50 | 1,5 | - | 24,9 | 2253 |
| 11 A | 4 | 18 22[3] | 2 | 50 | - | - | 23,2 | 2418 |
| 12 A | 4 | 14 | 2 | 50 | 1,5 | - | 25,1 | 2235 |
| 13 A | 4 | 14 | 1 | 50 | 1,5 | - | 24,6 | 2280 |
| 14 A | 4 | 14 | 3 | 50 | - | - | 26,3 | 2133 |
| 15 A | 4 | 14 | 5 | 50 | 1,5 | - | 22,6 | 2482 |
| 16 A | 4 | 14 | 2 | - | - | - | 107,0 | 524 |
| 17 A | 4 | 14 | 2 | 20 | - | - | 44,3 | 1266 |

Tabelle 1 - Fortsetzung

| Produkt-Nr. | Start-alkohol [C-Zahl] | Alkylenoxid-1 [C-Zahl] | Alkylenoxid-1 [Mol] | EO [Mol] | PO[1)] [Mol] | BO [Mol] | OH-Zahl | Molgewicht aus OH-Zahl [g/Mol] |
|---|---|---|---|---|---|---|---|---|
| 18 A | 4 | 14 | 2 | 25 | 19,0[2)] | - | 27,5 | 2040 |
| 19 A | 4 | 14 | 2 | 20 | - | 20,0 | 23,8 | 2357 |
| 20 A | 4 | 14 | 2 | 200 | - | - | 15,1 | 3715 |
| 21 A | 4 | 8 | 3,5 | 50 | - | - | 25,3 | 2217 |
| 22 A | 4 | 14 | 2 | 42 | 5,7[2)] | - | 28,4 | 1975 |
| 23 A | 18 | 14 | 2 | 50 | - | - | 19,0 | 2953 |
| 24 A | 18 | 14 | 3 | 50 | - | - | 19,0 | 2953 |
| 25 A | 18 | 14 | 4 | 50 | - | - | 19,5 | 2877 |
| 26 A | 18 | 18 | 2 | 50 | - | - | 19,0 | 2953 |
| 27 A | 18 | 18 | 3 | 50 | - | - | 18,1 | 3099 |
| 28 A | 18 | 18 | 4 | 50 | - | - | 18,2 | 3082 |
| 29 A | 1 | 14 | 9 | 50 | - | - | 15,1 | 3720 |

1) Endblock im Polyether

2) EO / PO-Gemisch

3) $C_{20}$ - $C_{28}$-Gemisch; ɸ C-Zahl = 22

**II. Herstellung der erfindungsgemäßen Verbindungen**

Verbindung 1 B

Ein Gemisch aus 180 g (ca. 0,09 Mol) eines Polyethylenglykols mit einem Molekulargewicht von 2000 und 48,8 g (ca. 0,02 Mol) eines monofunktionellen Polyethers mit hydrophober Endgruppe (Produkt 1 A) wird durch azeotrope Destillation in Gegenwart von 50 g Toluol sorgfältig entwässert. Anschließend werden 0,2 g Dibutylzinndilaurat und 101,3 g des Dimethylethers des Diethylenglykols (Diglyme) zugegeben. Bei einer Temperatur von 80°C werden über einen Zeitraum von einer Stunde 16,8 g (ca. 0,1 Mol) Hexamethylendiisocyanat zugegeben. Nach Ablauf von 3 h wird mit 56,6 g Diglyme verdünnt, nach ca. 5 h ist die Reaktion beendet. Das Reaktionsende wird dabei durch Bestimmung des Isocyanatwertes (= 0) durch Titration durch Dibutylamin ermittelt. Durch Gelpermeationschromatographie werden die Molekulargewichte des erhaltenen Polyurethans mit $\overline{M}_n$ = 18 900 und $\overline{M}_w$ = 70 300 bestimmt. Es wird ein Produkt erhalten, das bei Raumtemperatur fest ist, bei 50°C verflüssigt werden kann und in einem Gemisch von Propylenglykol und Wasser im Gewichtsverhältnis 2 : 1 löslich ist.

Die erfindungsgemäßen Verbindungen 2 B bis 37 B werden in analoger Weise hergestellt. Dabei werden unterschiedliche Polyalkylenoxidmonoole (Verbindungen 1 A bis 29 A), unterschiedliche Polyalkylenoxiddiole und Diisocyanate eingesetzt. Darüber hinaus wird das Molverhältnis von Diisocyanat und Polyalkylenoxiddiol variiert. Das Polyalkylenoxidmonool wird jeweils in einer Menge eingesetzt, die zur vollständigen Umsetzung aller Isocyanatgruppen ausreicht.

In der Tabelle 2 sind neben dem umgesetzten Polyalkylenoxidmonool die Zusammensetzung und die Menge des Polyalkylenoxiddiols, Art und Menge des Diisocyanates, sowie die mit dem Brookfield-Viskosimeter gemessene Viskosität von 0,1 bzw. 1 gew.-%igen Lösungen der erfindungsgemäßen Verbindungen in einem wäßrigen Dispersionslack Acronal 603 der Firma BASF AG, Ludwigshafen, mit einer Ausgangsviskosität von 250 cP und einem Festkörpergehalt von 53 Gew.-% und der Viskositätsindex, d.h. der Quotient der bei 1,5 und 15 Umdrehungen/Minute gemessenen Viskosität angegeben. Darüber hinaus sind Viskositätsmessungen zum Vergleich an Handelsprodukten vorgenommen worden.

Tabelle 2

| Produkt-Nr. | Polyethermonool Nr. | Polyoxyalkylendiol EO [%] | PO [%] | MG [g/Mol] | Menge [Mol] | Isocyanat Art | Menge [Mol] | Viskosität 0,1 %[1)] [mPas] | 1,0 %[3)] [mPas] | Viskositäts-Index |
|---|---|---|---|---|---|---|---|---|---|---|
| 1 B | 1 A | 100 | 0 | 2000 | 9 | HDI | 10 | 1400 | 12400 | 1,57 |
| 2 B | 2 A | 100 | 0 | 2000 | 9 | HDI | 10 | 1200 | 11600 | - |
| 3 B | 21 A | 100 | 0 | 2000 | 9 | HDI | 10 | 1000 | 5800 | 1,39 |
| 4 B | 8 A | 100 | 0 | 2000 | 9 | HDI | 10 | 280 | 900 | - |
| 5 B | 9 A | 100 | 0 | 2000 | 9 | HDI | 10 | 300 | 1000 | - |
| 6 B | 10 A | 100 | 0 | 2000 | 9 | HDI | 10 | 620 | 4000 | - |
| 7 B | 1 A | 100 | 0 | 2000 | 9 | HMDI | 10 | 1300 | 7600 | 1,32 |
| 8 B | 1 A | 100 | 0 | 2000 | 9 | TDI | 10 | 1200 | 7200 | 1,40 |
| 9 B | 19 A | 100 | 0 | 2000 | 9 | HDI | 10 | 1030 | 13000 | 1,76 |
| 10 B | 18 A | 100 | 0 | 2000 | 9 | HDI | 10 | 1200 | 10600 | 1,35 |
| 11 B | 17 A | 100 | 0 | 2000 | 9 | HDI | 10 | 1300 | 12000 | 1,70 |
| 12 B | 16 A | 100 | 0 | 2000 | 9 | HDI | 10 | 2850 | 27000 | 1,25 |
| 13 B | 15 A | 100 | 0 | 2000 | 9 | HDI | 10 | 11000 | 30000[4)] | 1,66 |
| 14 B | 14 A | 100 | 0 | 2000 | 9 | HDI | 10 | 2000 | 16000 | 1,38 |

Tabelle 2 - Fortsetzung

| Produkt-Nr. | Polyethermonool Nr. | Polyoxyalkylendiol EO [%] | PO [%] | MG [g/Mol] | Menge [Mol] | Isocyanat Art | Menge [Mol] | Viskosität 0,1 %[1)] [mPas] | 1,0 %[3)] [mPas] | Viskositäts-Index |
|---|---|---|---|---|---|---|---|---|---|---|
| 15 B | 14 A | 100 | 0 | 2000 | 13,5 | HDI | 14,5 | 1150 | 6000 | 1,52 |
| 16 B | 13 A | 100 | 0 | 2000 | 9 | HDI | 10 | 410 | 2800 | - |
| 17 B | 1 A | 100 | 0 | 6000 | 3 | HDI | 4 | 1160 | 8800 | 1,30 |
| 18 B | 1 A | 100 | 0 | 2000 | 4 | HDI | 5 | 1200 | 7600 | 1,45 |
| 19 B | 1 A | 100 | 0 | 2000 | 19 | HDI | 20 | 1300 | 8000 | 1,35 |
| 20 B | 1 A | 100 | 0 | 1000 | 18 | HDI | 19 | 1500 | 10500 | 1,39 |
| 21 B | 20 A | 100 | 0 | 2000 | 9 | HDI | 10 | 1200 | 11400 | 1,43 |
| 22 B | 22 A | 100 | 0 | 2000 | 9 | HDI | 10 | 1600 | 10900 | 1,72 |
| 23 B[2)] | 3 A | 100 | 0 | 2000 | 9 | HDI | 10 | 1500 | 11300 | 1,37 |
| 24 B | 3 A | 100 | 0 | 2000 | 9 | HDI | 10 | 1310 | 12100 | 1,55 |
| 25 B | 11 A | 100 | 0 | 2000 | 9 | HDI | 10 | 2850 | 18200 | 1,45 |
| 26 B | 12 A | 100 | 0 | 2000 | 9 | HDI | 10 | 3400 | 23000 | - |
| 27 B | 4 A | 100 | 0 | 2000 | 9 | HDI | 10 | 1800 | 15500 | - |
| 28 B | 5 A | 100 | 0 | 2000 | 9 | HDI | 10 | 1850 | 16000 | - |

Tabelle 2 - Fortsetzung

| Produkt-Nr. | Polyether-monool Nr. | Polyoxyalkylendiol EO [%] | PO [%] | MG [g/Mol] | Menge [Mol] | Isocyanat Art | Menge [Mol] | Viskosität 0,1 %[1] [mPas] | 1,0 %[3] [mPas] | Visko-sitäts-Index |
|---|---|---|---|---|---|---|---|---|---|---|
| 29 B | 6 A | 100 | 0 | 2000 | 9 | HDI | 10 | 2450 | 14800 | 1,45 |
| 30 B | 23 A | 100 | 0 | 2000 | 9 | HDI | 10 | 8600 | 19300[4] | - |
| 31 B | 24 A | 100 | 0 | 2000 | 9 | HDI | 10 | 11200 | 29600[4] | - |
| 32 B | 25 A | 100 | 0 | 2000 | 9 | HDI | 10 | 32000 | 62000[5] | 1,87 |
| 33 B | 26 A | 100 | 0 | 2000 | 9 | HDI | 10 | 9300 | 22500[4] | - |
| 34 B | 27 A | 100 | 0 | 2000 | 9 | HDI | 10 | 12500 | 35000[4] | 1,81 |
| 35 B | 28 A | 100 | 0 | 2000 | 9 | HDI | 10 | 16000 | 41000[4] | 1,88 |
| 36 B | 7 A | 100 | 0 | 2000 | 9 | HDI | 10 | 2500 | 21000 | 1,78 |
| 37 B | 1 A | 75 | 25 | 2700 | 7 | HDI | 8 | 820 | 5800 | 1,60 |
| 38 B | 29 A | 100 | 0 | 2000 | 19 | HDI | 20 | 41000 | > 100000 | - |

Tabelle 2 - Fortsetzung

| Produkte des Handels | Viskosität 0,1 %[1)] [mPas] | Viskosität 1,0 %[3)] [mPas] | Viskositäts-Index |
|---|---|---|---|
| Rheolate 278 | 620 | 2300 | 1,96 |
| Rheolate 205 | 500 | 1900 | 2,15 |
| Rheolate 208 | 330 | 1400 | 1,88 |
| Collacral PU 75 | 570 | 3900 | 2,20 |
| Vergleichsprodukt aus US-PS 4 496 708, Beispiel 17 | 1900 | 11200 | 2,05 |

Der Lack auf Basis Acronal A 603 ohne Verdicker hat eine Viskosität von 250 cP.

Das Vergleichsprodukt gemäß US-PS 4 496 708, Beispiel 17, ist ein Urethan aus Polyethylenglykol 3000, 1,2-Hexadecandiol und Toluoldiisocyanat im Molverhältnis 26,7 : 15,3 : 39,0. Diese Vergleichssubstanz weist eine hohe Strukturviskosität auf.

1) Viskosität Brookfield Spindel LV-2 bei 3 Upm

2) Synthese: zweistufig, 60 %ig in Diglyme bei 80°C, Zusatz von 0,1 Gew.-% Dibutylzinndilaurat

3) Viskosität Brookfield Spindel LV-3 bei 3 Upm 1,0 % Wirkstoff im Dispersionslack auf Basis Acronal A 603; Festkörpergehalt ca. 53 %

4) 0,5 % Wirkstoff im Dispersionslack

5) 0,3 % Wirkstoff im Dispersionslack

6) Viskositätsindex $=\frac{\text{Viskosität bei 1,5 Upm}}{\text{Viskosität bei 15 Upm}}$

HDI = Hexamethylendiisocyanat
HMDI = 4,4'-Dicyclohexylmethandiisocyanat
TDI = Toluylendiisocyanat
PEG = Polyethylenglykol

## Patentansprüche

1. Verbindungen der allgemeinen Formel

$$A - ( B - C )_m - B - A$$

in der A ein Rest der Formel

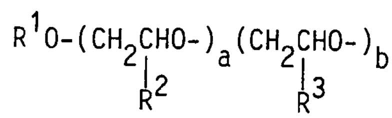

B ein Rest der Formel

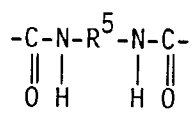

C ein Rest der Formel

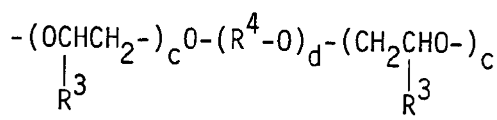

ist

| | |
|---|---|
| $R^1$ = | Alkylrest mit 1 bis 22 Kohlenstoffatomen, oder ein Alkylarylrest, dessen Alkylrest 8 bis 12 Kohlenstoffatome aufweist, |
| $R^2$ = | Alkylrest mit 6 bis 26 Kohlenstoffatomen, |
| $R^3$ = | Wasserstoff-, Methyl- oder Ethylrest, mit der Maßgabe, daß mindestens 50 % der Reste $R^3$ Wasserstoffreste sind, |
| $R^4$ = | zweiwertiger Kohlenwasserstoffrest mit 2 bis 15 Kohlenstoffatomen, |
| $R^5$ = | zweiwertiger Kohlenwasserstoffrest mit 6 bis 13 Kohlenstoffatomen, |
| a = | Wert von 1 bis 10, |
| b = | Wert von 0 bis 200, |
| c = | Wert von 5 bis 200, |
| d = | Wert von 0 oder 1, |
| m = | Wert von 0 bis 20, wobei $b \geqq 2$ sein muß, wenn m einen Wert von 0 hat. |

2. Verbindungen nach Anspruch 1, dadurch gekennzeichnet, daß $R^2$ ein geradkettiger Alkylrest mit 12 bis 18 Kohlenstoffatomen ist.

3. Verbindungen nach Anspruch 1 oder 2, dadurch gekennzeichnet, daß $R^3$ ein Wasserstoffrest ist.

4. Verbindungen nach einem oder mehreren der vorhergehenden Ansprüche, dadurch gekennzeichnet, daß $R^4$ ein zweiwertiger Alkylenrest mit 2 bis 6 Kohlenwasserstoffatomen ist.

5. Verbindungen nach einem oder mehreren der vorhergehenden Ansprüche, dadurch gekennzeichnet, daß

$R^5$ ein Alkylenrest mit 6 bis 10 Kohlenstoffatomen ist.

6. Verbindungen nach Anspruch 5, dadurch gekennzeichnet, daß $R^5$ ein Hexamethylenrest ist.

7. Verbindungen nach Anspruch 5, dadurch gekennzeichnet, daß $R^5$ ein Diphenylenmethanrest ist.

8. Verbindungen nach Anspruch 5, dadurch gekennzeichnet, daß $R^5$ ein Toluylenrest ist.

9. Verbindungen nach einem oder mehreren der vorhergehenden Ansprüche, dadurch gekennzeichnet, daß a einen Wert von 2 bis 5 hat.

10. Verbindungen nach einem oder mehreren der vorhergehenden Ansprüche, dadurch gekennzeichnet, daß c einen Wert von 50 bis 100 hat.

11. Verfahren zur Herstellung von Verbindungen nach einem oder mehreren der vorhergehenden Ansprüche, dadurch gekennzeichnet, daß man entweder
a) zunächst Diisocyanate der allgemeinen Formel

$$O=C=N-R^5-N=C=O,$$

mit Polyoxyalkylendiolen der allgemeinen Formel

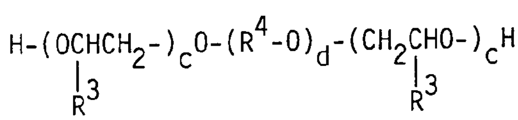

in zur Urethanbildung an sich bekannter Weise in einem Molverhältnis (m+1) Mol Diisocyanat : m Mol Polyoxyalkylendiol umsetzt und das erhaltene Produkt mit zur Umsetzung der restlichen Isocyanatgruppen ausreichenden Mengen eines Polyoxyalkylenmonoethers der allgemeinen Formel

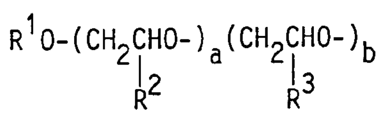

umsetzt, oder
b) das Gemisch der Polyoxyalkylenmono- und -diole mit den Diisocyanaten in den oben angegebenen Molverhältnissen und der oben angegebenen Weise umsetzt.

12. Verwendung der Verbindungen nach einem oder mehreren der Ansprüche 1 bis 9 als wasserdispergierbare Verdickungsmittel für überwiegend wäßrige Systeme, insbesondere Dispersionsfarben.

## Claims

1. Compounds of the general formula

$$A-(B-C)_m-B-A$$

in which
A is a radical of the formula

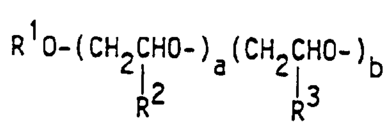

B is a radical of the formula

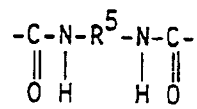

C is a radical of the formula

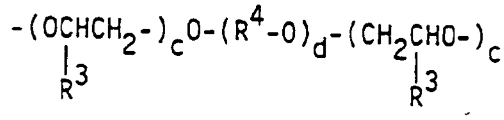

$R^1$ is an alkyl radical having 1 to 22 carbon atoms or an alkylaryl radical whose alkyl radical has 8 to 12 carbon atoms,
$R^2$ is an alkyl radical having 6 to 26 carbon atoms,
$R^3$ is a hydrogen, methyl or ethyl radical, with the proviso that at least 50% of the radicals $R^3$ are hydrogen radicals,
$R^4$ is a divalent hydrocarbon radical having 2 to 15 carbon atoms,
$R^5$ is a divalent hydrocarbon radical having 6 to 13 carbon atoms,
a has a value of from 1 to 10,
b has a value of from 0 to 200,
c has a value of from 5 to 200,
d has a value of 0 or 1,
m has a value of from 0 to 20, where b must be $\geqq 2$ if m has a value of 0.

**2.** Compounds according to Claim 1, characterized in that $R^2$ is a straight-chain alkyl radical having 12 to 18 carbon atoms.

**3.** Compounds according to Claim 1 or 2, characterized in that $R^3$ is a hydrogen radical.

**4.** Compounds according to one or more of the preceding claims, characterized in that $R^4$ is a divalent alkylene radical having 2 to 6 carbon atoms.

**5.** Compounds according to one or more of the preceding claims, characterized in that $R^5$ is an alkylene radical having 6 to 10 carbon atoms.

**6.** Compounds according to Claim 5, characterized in that $R^5$ is a hexamethylene radical.

**7.** Compounds according to Claim 5, characterized in that $R^5$ is a diphenylenemethane radical.

**8.** Compounds according to Claim 5, characterized in that $R^5$ is a tolylene radical.

**9.** Compounds according to one or more of the preceding claims, characterized in that a has a value of from 2 to 5.

**10.** Compounds according to one or more of the preceding claims, characterized in that c has a value of from 50 to 100.

**11.** Process for the preparation of compounds according to one or more of the preceding claims, characterized in that either
a) firstly diisocyanates of the general formula

$$O{=}C{=}N{-}R^5{-}N{=}C{=}O$$

are reacted with polyoxyalkylenediols of the general formula

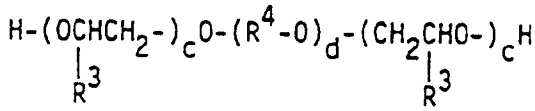

in a molar ratio of (m+1) mol of diisocyanate : m mol of polyoxyalkylenediol in the manner known per se for the formation of urethane, and the resultant product is reacted with a polyoxyalkylene monoether of the general formula

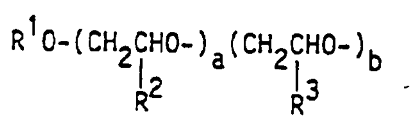

in an amount sufficient for reaction of the remaining isocyanate groups or
b) the mixture of polyoxyalkylenemonools and -diols is reacted with the diisocyanates in the above molar ratios and in the above manner.

12. Use of the compounds according to one or more of Claims 1 to 9 as water-dispersible thickeners for predominantly aqueous systems, in particular emulsion paints.

## Revendications

1. Composés répondant à la formule générale :

$$A - ( B - C )_m - B - A$$

où
A est un reste de formule

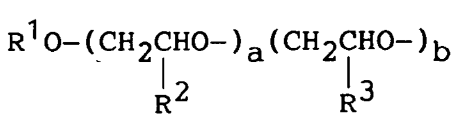

B est un reste de formule

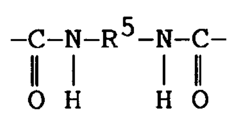

C est un reste de formule

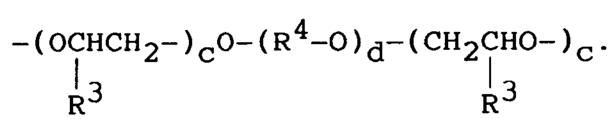

| | |
|---|---|
| $R^1$ | = un reste alkyle ayant de 1 à 22 atomes de carbone ou un reste alkylaryle dont le reste alkyle comporte de 8 à 12 atomes de carbone, |
| $R^2$ | = un reste alkyle ayant de 6 à 26 atomes de carbone, |
| $R^3$ | = un reste d'hydrogène ou un reste méthyle ou éthyle, à la condition qu'au moins 50 % des restes $R^3$ soient des restes d'hydrogène, |
| $R^4$ | = un reste d'hydrocarbure bivalent ayant de 2 à 15 atomes de carbone, |
| $R^5$ | = un reste d'hydrocarbure bivalent ayant de 6 à 13 atomes de carbone, |
| a | = une valeur de 1 à 10, |

b = une valeur de 0 à 200,
c = une valeur de 5 à 200,
d = une valeur de 0 ou 1,
m = une valeur de 0 à 20, b devant être supérieur ou égal à 2 quand m vaut 0.

**2.** Composés selon la revendication 1, caractérisés en ce que $R^2$ est un reste alkyle à chaîne droite ayant de 12 à 18 atomes de carbone.

**3.** Composés selon la revendication 1 ou 2, caractérisés en ce que $R^3$ est un reste d'hydrogène.

**4.** Composés selon une ou plusieurs des revendications précédentes, caractérisés en ce que $R^4$ est un reste alkylène bivalent ayant de 2 à 6 atomes d'hydrocarbure.

**5.** Composés selon une ou plusieurs des revendications précédentes, caractérisés en ce que $R^5$ est un reste alkylène ayant de 6 à 10 atomes de carbone.

**6.** Composés selon la revendication 5, caractérisés en ce que $R^5$ est un reste hexaméthylène.

**7.** Composés selon la revendication 5, caractérisés en ce que $R^5$ est un reste diphénylèneméthane.

**8.** Composés selon la revendication 5, caractérisés en ce que $R^5$ est un reste toluylène.

**9.** Composés selon une ou plusieurs des revendications précédentes, caractérisés en ce que "a" vaut de 2 à 5.

**10.** Composés selon une ou plusieurs des revendications précédentes, caractérisés en ce que "c" vaut de 50 à 100.

**11.** Procédé de préparation des composés selon une ou plusieurs des revendications précédentes, caractérisé en ce qu'on fait réagir :

a) d'abord des diisocyanates répondant à la formule générale :

$$O=C=N-R^5-N=C=O,$$

avec des polyoxyalkylènediols répondant à la formule générale :

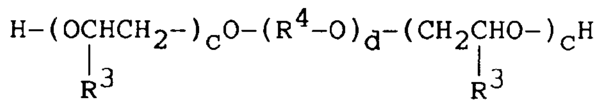

d'une manière connue en soi pour la formation d'un uréthane, selon un rapport molaire de (m+1) moles de diisocyanate : m moles de polyoxyalkylènediol, et on fait réagir le produit obtenu avec un monoéther de polyoxyalkylène de formule générale :

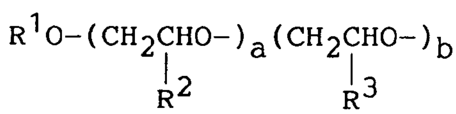

en quantités suffisantes pour la mise en réaction des groupes restants d'isocyanate, ou

b) on fait réagir le mélange des polyoxyalkylènemonools et des polyoxyalkylènediols avec les diisocyanates selon les rapports molaires indiqués ci-dessus et de la manière indiquée ci-dessus.

**12.** Utilisation des composés selon une ou plusieurs des revendications 1 à 9 comme des agents épaississants pour des systèmes essentiellement aqueux, en particulier des peintures de dispersion.